(19)

Europäisches
Patentamt
European
Patent Office
Office européen
des brevets

(11) **EP 1 876 201 B1**

(12) **EUROPEAN PATENT SPECIFICATION**

(45) Date of publication and mention
of the grant of the patent:
**26.08.2009 Bulletin 2009/35**

(51) Int Cl.:
***C08K 5/00*** *(2006.01)* ***C08L 83/04*** *(2006.01)*
***C09K 3/10*** *(2006.01)* ***C09D 183/04*** *(2006.01)*
***H01L 33/00*** *(2006.01)* *C08K 3/22* *(2006.01)*
*C08K 3/36* *(2006.01)*

(21) Application number: **07252671.8**

(22) Date of filing: **03.07.2007**

(54) **Use of a resin composition for sealing an LED element**

Verwendung einer Harzzusammensetzung zur Versiegelung eines LED-Elements

Utilisation d'une composition de résine pour le scellement d'un élément LED

(84) Designated Contracting States:
**DE**

(30) Priority: **04.07.2006 JP 2006184501**

(43) Date of publication of application:
**09.01.2008 Bulletin 2008/02**

(73) Proprietor: **Shin-Etsu Chemical Co., Ltd.**
**Tokyo (JP)**

(72) Inventors:
• **Shimizu, Hisashi,**
**c/o Silicone Denshi Zairyo Gijutsu**
**Matsuida-machi**
**Annaka-shi**
**Gunma-ken (JP)**

• **Kashiwagi, Tsutomu,**
**c/o Silicone Denshi Zairyo Gijutsu**
**Matsuida-machi**
**Annaka-shi**
**Gunma-ken (JP)**

(74) Representative: **Hallybone, Huw George et al**
**Carpmaels & Ransford**
**43-45 Bloomsbury Square**
**London WC1A 2RA (GB)**

(56) References cited:
**EP-A- 1 375 615** **GB-A- 759 013**
**GB-A- 2 137 648** **JP-A- 2005 093 724**
**JP-A- 2005 350 639** **US-A1- 2006 078 717**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to an optical material, and more specifically to a resin composition for sealing an LED element that exhibits high levels of heat resistance and ultraviolet light resistance, has excellent optical transparency and favorable toughness, and can exhibit a high refractive index, as well as a cured product thereof.

Furthermore, the present invention also relates to a resin composition for sealing an LED element that exhibits a high level of heat resistance, excellent optical transparency, favorable toughness, and an improved level of light extraction efficiency from semiconductor light emitting elements at a high refractive index, as well as a cured product thereof.

2. Description of the Prior Art

Due to their favorable workability and ease of handling, highly transparent epoxy resins and silicone resins are widely used as the sealing materials for optical devices such as LED elements. Recently, LEDs with shorter wavelengths such as blue LEDs and ultraviolet LEDs have been developed, and the potential applications for these diodes are expanding rapidly. Under these circumstances, conventional epoxy resins and silicone resins present various problems, including yellowing of the resin under strong ultraviolet light, or even rupture of the resin skeleton in severe cases, meaning such resins can no longer be used.

In the case of ultraviolet LED applications, resin sealing is particularly problematic, meaning sealing with glass is currently the only viable option.

On the other hand, in recent years the demand for I.ED-based vehicle-mounted and outdoor displays, mid traffic signals and the like has grown rapidly, meaning increasing the brightness of LEDs is becoming increasingly important. Important factors in increasing the brightness of LEDs include improving the light emitting efficiency of the active layer (the internal quantum efficiency), and increasing the proportion of light from inside the chip that can be extracted externally the external quantum efficiency). The brightness is determined as the product of these two factors. However, because the refractive index of the materials used in constructing light emitting semiconductor elements such as T,EDs is as high as 3.3 to 3.5, a portion of the emitted light undergoes total reflection at the surface of the element, meaning it is impossible to efficiently extract the emitted light from the element. As a result, the proportion of light from inside the LFD element that can he extracted externally is approximately 20%, meaning the light cannot be utilized efficiently.

An ideal method of reducing the effect of total reflection of the light emitted from an LED involves producing the chip in a spherical shape, but this method requires that the element is significantly thicker, and production is also problematic, making it impractical. A simpler method involves roughening the chip surface, either by treatment with an appropriate chemical or by mechanical grinding or the like, thereby causing diffuse reflection and increasing the probability of light extraction. This method is known as frosting, and although widely used in practical applications, it suffers from minimal effect and large variations in the effect.

EP 1 375 615 discloses a hardcoat composition comprising (A) a hydrolytic condensate of a hydrolyzable silicon compound, (B) a metal oxide, (C) a siloxane resin of formula: $R^2{}_bSi(OR^3)_c(OH)_dO_{(4-b-c-d)/2}$ and (D) a curing catalyst, to form a hardcoat film having satisfactory hardness, transparency, adhesion and improved weather resistance.

SUMMARY OF THE INTENTION

Accordingly, a first object of the present invention is to provide a resin composition for scaling an LED element that exhibits high levels of heat resistance and ultraviolet light resistance, has excellent optical transparency, favorable loughness and powerful adhesion, and can exhibit a high refractive index, as well as a cured product thereof.

Furthermore, a second object of the present invention is to provide a resin composition for sealing an LED element that exhibits a high level of heat resistance, excellent optical transparency, favorable toughness, powerful adhesion, and an improved level of light extraction efficiency from semiconductor light emitting elements at a high refractive index, as well as a transparent cured product thereof.

As a result of intensive research aimed at achieving the above objects, the inventors of the present invention discovered that a composition described below and a cured product thereof were able to achieve the above objects.

In other words, a first aspect of the present invention provides a resin composition for sealing an LED element, comprising:

(A) an organopolysiloxane with a polystyrene equivalent weight average molecular weight of at least $3 \times 10^3$, represented by an average composition formula (1) shown below:

$$R^1_a(OX)_b SiO_{(4-a-b)/2} \qquad (1)$$

(wherein, each $R^1$ represents, independently, an alkyl group of 1 to 6 carbon atoms, an alkenyl group of 2 to 6 carbon atoms, or an aryl group of 6 to 10 carbon atoms, each X represents, independently, a hydrogen atom, or an alkyl group, alkenyl group, alkoxyalkyl group or acyl group of 1 to 6 carbon atoms, a represents a number within a range from 1.00 to 1.5, and b represents a number that satisfies $0 < b < 2$, provided that $1.00 < a+b < 2$),

(B) a condensation catalyst comprising an aluminum chelate compound, and

(C) a metal oxide sol.

In those cases where the composition is used within an application that requires particularly favorable ultraviolet light resistance, the use of a composition in which the $R^1$ groups within the above average composition formula (1) comprise only alkyl groups of 1 to 6 carbon atoms is desirable. In contrast, in those cases where the composition is used within an application in which the purpose is improving the light extraction efficiency from the semiconductor light emitting element by ensuring a high refractive index, the use of a composition in which the $R^1$ groups within the above average composition formula (1) comprise both alkyl groups of 1 to 6 carbon atoms and aryl groups of 6 to 10 carbon atoms is desirable.

A second aspect of the present invention provides a transparent cured product produced by curing the above composition.

A third aspect of the present invention provides an aforementioned cured product with a refractive index of at least 1.42.

A cured product of a composition of the present invention exhibits excellent heat resistance, ultraviolet light resistance, optical transparency, toughness and adhesion, and also has a refractive index of at least 1.42. Accordingly, it is useful for sealing LED elements.

Furthermore, a composition cured product in which the refractive index is set to at least 1.42 exhibits excellent heat resistance, optical transparency, toughness and adhesion, and is particularly useful for sealing LED elements in which the light extraction efficiency from the semiconductor light emitting element is favorable.

DETAILED DESCRIPTION OF THE PREFERRED EMBODIMENTS

As follows is a more detailed description of the present invention. In this description, room temperature is defined as $24 \pm 2°C$. Furthermore, polystyrene equivalent weight average molecular weight values refer to values measured by gel permeation chromatography (GPC).

[(A) Organopolysiloxane]

The component (A) is an organopolysiloxane with a polystyrene equivalent weight average molecular weight of at least $3 \times 10^3$, represented by the average composition formula (1) shown above.

In the above average composition formula (1), examples of suitable alkyl groups of 1 to 6 carbon atoms represented by $R^1$ include a methyl group, ethyl group, propyl group, or butyl group. Examples of suitable alkenyl groups of 2 to 6 carbon atoms include a vinyl group or allyl group. An example of a suitable aryl group of 6 to 10 carbon atoms is a phenyl group. These $R^1$ groups are selected appropriately in accordance with the characteristics required of the target device. For example, in those cases where the composition is used within an application that requires favorable ultraviolet light resistance, the $R^1$ groups preferably comprise only alkyl groups of 1 to 6 carbon atoms, whereas in those cases where the composition is used within an application in which the purpose is improving the light extraction efficiency from the semiconductor element by ensuring a high refractive index, the use of a composition in which the $R^1$ groups either comprise both alkyl groups of 1 to 6 carbon atoms and aryl groups of 6 to 10 carbon atoms, or comprise solely aryl groups of 6 to 10 carbon atoms, is preferred. Of these groups, methyl groups are preferred in the case of components comprising only alkyl groups, phenyl groups are preferred in the case of components comprising only aryl groups, and a combination of methyl groups and phenyl groups is preferred in the case of a composition comprising both alkyl groups and aryl groups.

In the above average composition formula (1), examples of suitable alkyl groups of 1 to 6 carbon atoms represented by X include a methyl group, ethyl group, propyl group, isopropyl group, butyl group, or isobutyl group. An example of a suitable alkenyl group of 1 to 6 carbon atoms is a vinyl group. Examples of suitable alkoxyalkyl groups of 1 to 6 carbon atoms include a methoxyethyl group, ethoxyethyl group, or butoxyethyl group. Examples of suitable acyl groups of 1 to 6 carbon atoms include an acetyl group or propionyl group. Of these, a hydrogen atom, methyl group or isobutyl group is preferred as the X group.

In the above average composition formula (1), a is preferably a number within a range from 1.15 to 1.25, and b is preferably a number that satisfies $0.01 \leq b < 1.4$, and even more preferably $0.01 \leq b \leq 1.0$, and most preferably $0.05 \leq b \leq 0.3$. If the value of a is less than 1.00, then cracks are more likely to form in the cured product, whereas if the value exceeds 1.5, the cured product loses toughness, and is prone to becoming brittle. If b is zero, then the adhesiveness of the cured product relative to substrates deteriorates, whereas if b is 2 or greater, a cured product may be unobtainable. Furthermore, the value of a+b preferably satisfies $1.06 \leq a+b \leq 1.8$, and even more preferably $1.1 \leq a+b \leq 1.7$.

Furthermore, in order to ensure a more superior level of heat resistance for the cured product, the proportion of organic groups within the organopolysiloxane is preferably kept low, and consequently the (mass referenced) proportion of the $R^1$ groups within the average composition formula (1) is preferably reduced, and specifically, is preferably restricted to not more than 29% by mass, and typically to a value within a range from 7 to 20% by mass. In those cases where the composition is used within an application that requires favorable ultraviolet light resistance in addition to favorable heat resistance, then as described above, the $R^1$ groups are alkyl groups (and particularly methyl groups), and the proportion of these alkyl groups is preferably not more than 29% by mass, and is typically a value within a range from 7 to 20% by mass. In those cases where the composition is used within an application that requires favorable ultraviolet light resistance, because the introduction of aryl groups such as phenyl groups promotes ultraviolet light deterioration, the introduction of such aryl groups is undesirable.

In order to improve the light extraction efficiency from the LED element in applications that require favorable ultraviolet light resistance, the refractive index is preferably increased by including a metal oxide sol of the component (C) described below within the system comprising only alkyl groups such as methyl groups as the $R^1$ groups.

Furthermore, in the case of applications that do not strictly require ultraviolet light resistance, in order to improve the light extraction efficiency from the LED element, the refractive index is preferably increased even further by raising the proportion of the aryl groups amongst the $R^1$ groups, and also including fine particles of a metal oxide sol of the component (C) described below. The refractive index of the cured product tends to increase as the proportion of aryl groups amongst the $R^1$ groups increases. Specific examples include component (A) in which $R^1$ comprises both alkyl groups and aryl groups, and component (A) in which $R^1$ comprises solely aryl groups. The proportion of aryl groups amongst the $R^1$ groups should be determined with due consideration of the level of ultraviolet light resistance required and the light extraction efficiency required, and the molar ratio of alkyl groups / aryl groups (or more specifically, methyl groups / phenyl groups) is preferably within a range from 0/10 to 9/1, and is more preferably from 1/9 to 5/5.

The organopolysiloxane of this component can be produced, for example, either by hydrolysis and condensation of a silane compound represented by a general formula (2) shown below:

$$SiR^2_c(OR^3)_{4-c} \qquad (2)$$

(wherein, each $R^2$ represents, independently, a group as defined above for $R^1$, each $R^3$ represents, independently, a group as defined above for X with the exception of a hydrogen atom, and c represents an integer of 1 to 3), or by cohydrolysis and condensation of a silane compound represented by the above general formula (2), and an alkyl silicate represented by a general formula (3) shown below:

$$Si(OR^3)_4 \qquad (3)$$

(wherein, each $R^3$ represents, independently, a group as defined above) and/or a condensation polymerization product of the alkyl silicate (an alkyl polysilicate) (hereafter referred to jointly as an alkyl (poly)silicate). Both the silane compound and the alkyl (poly)silicate may be used either alone, or in combinations of two or more different materials.

Examples of the silane compound represented by the above general formula (2) include methyltrimethoxysilane, methyltriethoxysilane, ethyltrimethoxysilane, ethyltriethoxysilane, phenyltrimethoxysilane, phenyltriethoxysilane, dimethyldimethoxysilane, dimethyldiethoxysilane, diphenyldimethoxysilane, diphenyldiethoxysilane, methylphenyldimethoxysilane and methylphenyldiethoxysilane, and of these, methyltrimethoxysilane or dimethyldimethoxysilane is preferred. These silane compounds may be used either alone, or in combinations of two or more different compounds.

Examples of the alkyl silicate represented by the above general formula (3) include tetraalkoxysilanes such as tetramethoxysilane, tetraethoxysilane and tetraisopropyloxysilane, whereas examples of the condensation polymerization product of the alkyl silicate (the alkyl polysilicate) include methyl polysilicate and ethyl polysilicate. These alkyl (poly) silicates may be used either alone, or in combinations of two or more different materials.

Of these possibilities, in the case of applications that require ultraviolet light resistance, the organopolysiloxane of this component preferably comprises from 50 to 95 mol% of an alkyltrialkoxysilane such as methyltrimethoxysilane, and from 50 to 5 mol% of a dialkyldialkoxysilane such as dimethyldimethoxysilane, and even more preferably comprises from 75 to 85 mol% of an alkyltrialkoxysilane such as methyltrimethoxysilane, and from 25 to 15 mol% of a dialkyldialkoxysilane such as dimethyldimethoxysilane, as such organopolysiloxanes ensure superior levels of crack resistance and heat resistance in the resulting cured product.

In contrast, in the case of applications that do not strictly require ultraviolet light resistance, the organopolysiloxane of this component preferably comprises from 50 to 95 mol% of a trialkoxysilane, including alkyltrialkoxysilanes such as methyltrimethoxysilane, and phenyltrimethoxysilane, and from 50 to 5 mol% of a dialkoxysilane, including dialkyldialkoxysilanes such as dimethyldimethoxysilane, and diphenyldimethoxysilane, and even more preferably comprises from 75 to 85 mol% of a trialkoxysilane, including alkyltrialkoxysilanes such as methyltrimethoxysilane, and phenyltrimethoxysilane, and from 25 to 15 mol% of a dialkoxysilane, including dialkyldialkoxysilanes such as dimethyldimethoxysilane, and diphenyldimethoxysilane, as such organopolysiloxanes ensure superior levels of crack resistance and heat resistance in the resulting cured product.

In a preferred embodiment of the present invention, the organopolysiloxane of this component can be obtained either by hydrolysis and condensation of a silane compound described above, or by cohydrolysis and condensation of an aforementioned silane compound and an alkyl (poly)silicate, and although there are no particular restrictions on the method used for the reaction, the conditions described below represent one example of a suitable method.

The above silane compound, together with the alkyl (poly)silicate in some cases, is preferably dissolved in an organic solvent prior to use. This organic solvent is described below in the section relating to other optional components, but of the possible solvents, alcohols such as methanol, ethanol, isopropyl alcohol, isobutyl alcohol, n-butanol and 2-butanol are preferred, and of these, isobutyl alcohol is more preferred as it produces superior levels of curability for the composition and excellent toughness for the cured product.

In addition, the above silane compound, together with the alkyl (poly)silicate in some cases, preferably undergoes hydrolysis or cohydrolysis and condensation in the presence of an acid catalyst such as acetic acid, hydrochloric acid, or sulfuric acid. In those cases where an acid catalyst is used, the above silane compound, together with the alkyl (poly)silicate in some cases, is preferably partially hydrolyzed and condensed to a low molecular weight state in advance, in order to achieve more favorable compatibility with the component (C) described below. If the silane compound and the alkyl (poly)silicate are mixed with the component (C) in either a monomer state or a high molecular weight state, then the component (C) may gel.

From the viewpoint of ease of handling and considering pot life, the polystyrene equivalent weight average molecular weight of the organopolysiloxane of this component must be at least $3 \times 10^3$, and is preferably within a range from $3 \times 10^3$ to $3 \times 10^6$, and is even more preferably from $5 \times 10^3$ to $3 \times 10^5$. If this molecular weight is less than $3 \times 10^3$, then the composition is prone to cracking upon curing. If the molecular weight is too large, then the composition becomes prone to gelling, and the workability may deteriorate.

The organopolysiloxane of this component may use either a single compound, or a combination of two or more different compounds.

[(B) Condensation Catalyst comprising an Aluminum Chelate Compound]

The condensation catalyst of the component (B) comprises an aluminum chelate compound, and is necessary to enable curing of the organopolysiloxane of the component (A). Using an aluminum chelate compound as a condensation catalyst yields superior curability.

Examples of this aluminum chelate compound include reaction products of an aluminum trialkoxide (in which the number of carbon atoms within the alkoxide groups is typically from 2 to 4) and an alkyl acetoacetate (in which the number of carbon atoms within the alkyl group is typically from 1 to 2), and specific examples include ethylacetoacetate aluminum diisopropylate, aluminum tris(ethylacetoacetate), aluminum monoacetylacetonate bis(ethylacetoacetate), aluminum acetylacetonate, and aluminum butoxybisethylacetoacetate, and of these, aluminum monoacetylacetonate bis (ethylacetoacetate), aluminum tris(ethylacetoacetate) or aluminum acetylacetonate is preferred.

The blend quantity of the component (B) is typically within a range from 0.05 to 10 parts by mass per 100 parts by mass of the component (A), although in terms of obtaining a composition with superior levels of curability and stability, a quantity within a range from 0.1 to 5 parts by mass is preferred.

The condensation catalyst of this component may use either a single compound, or a combination of two or more different compounds.

[(C) Fine Particles of Metal Oxide Sol]

The fine particles of a metal oxide sol of the component (C) contribute to an improvement in the hardness of the cured product and an increase in the refractive index. These fine particles of metal oxide sol are typically a sol with a non-volatile fraction of 10 to 40% by mass, and preferably from 20 to 30% by mass, and are preferably a metal oxide sol with a high refractive index (for example, a refractive index of at least 1.7). Of the various possibilities, the use of either one material, or a combination of two or more materials selected from the group consisting of titania sols, antimony oxide sols, silica sols, alumina sols, zirconium oxide sols, and lithium oxide sols is preferred. Titania sols are particularly preferred as they yield a higher refractive index. Furthermore, in terms of achieving more favorable transparency for the cured product, the average particle size of the fine particles of metal oxide sol is preferably not more than 200 nm, and is even more preferably 100 nm or smaller.

By including the fine particles of metal oxide sol of this component, a cured product with a refractive index of at least 1.42 can be obtained, and if a titania sol is used for these fine particles of metal oxide sol, then the refractive index can be increased even further, enabling the production of a composition that is ideal for sealing LED elements.

Furthermore, blending the fine particles of metal oxide sol into the composition improves the toughness (that is, lowers the stress) of the cured product. It is well known that, generally, if fine particles of a metal oxide sol form a "islands in a sea" structure within a silicone matrix, then the resulting cured product exhibits superior low stress characteristics. The reason for this observation is that the fine particles of metal oxide sol that are dispersed at nano-sizes as the islands within the "islands in a sea" structure are able to function favorably within the silicone matrix.

Examples of materials that can be used as the fine particles of metal oxide sol of the component (C) include readily available acidic and basic solutions (namely, colloid solutions dispersed within water or an organic solvent such as alcohols) of the above fine particles of metal oxide sol, and specific examples, listed using their product names, include Optolake 1130Z (a titania sol with a non-volatile fraction of 30% by mass, manufactured by Catalysts & Chemicals Ind. Co., Ltd.), Titanium Oxide Sol NTS-10R (a titania sol with a non-volatile fraction of 10% by mass, manufactured by Nissan Chemical Industries, Ltd.), Sun Colloid AMT-130 (a water-based antimony oxide sol with a non-volatile fraction of 30% by mass, manufactured by Nissan Chemical Industries, Ltd.), Alumina Sol 520 (an alumina sol with a non-volatile fraction of 10% by mass, manufactured by Nissan Chemical Industries, Ltd.), and Alumina Clear Sol (an alumina sol, manufactured by Kawaken Fine Chemicals Co., Ltd.).

The blend quantity of the fine particles of metal oxide sol of the component (C), reported in terms of the non-volatile fraction, is preferably within a range from 10 to 200 parts by mass, more preferably from 10 to 150 parts by mass, and even more preferably from 20 to 80 parts by mass, per 100 parts by mass of the component (A). If the blend quantity satisfies this range, then the cured product exhibits more favorable levels of refractive index, low stress characteristics, and transparency.

[Other Optional Components]

In addition to the aforementioned components (A) through (C), other optional components can also be added to the composition of the present invention, provided such addition does not impair the actions or effects of the present invention. Examples of these other optional components include inorganic fillers, inorganic phosphors, age resistors, radical inhibitors, ultraviolet absorbers, adhesion improvers, flame retardants, surfactants, storage stability improvers, antiozonants, photostabilizers, thickeners, plasticizers, coupling agents, antioxidants, thermal stabilizers, conductivity imparting agents, antistatic agents, radiation blockers, nucleating agents, phosphorus-based peroxide decomposition agents, lubricants, pigments, metal deactivators, physical property modifiers, and organic solvents. These optional components may be used either alone, or in combinations of two or more different materials.

- Organic Solvents -

The organic solvent mentioned above as an optional component has the action of retaining the organopolysiloxane of the component (A) in a more stable state without causing gelling, and the blending of such an organic solvent into a composition of the present invention is preferred. There are no particular restrictions on the organic solvent used, although a solvent with a boiling point of at least 64°C is preferred, and specific examples of suitable solvents include ether-based solvents such as tetrahydrofuran, 1,4-dioxane, and diethyl ether; ketone-based solvents such as methyl ethyl ketone; halogen-based solvents such as chloroform, methylene chloride, and 1,2-dichloroethane; alcohol-based solvents such as methanol, ethanol, isopropyl alcohol, and isobutyl alcohol; silicone-based solvents such as octamethylcyclotetrasiloxane and hexamethyldisiloxane; high boiling point solvents such as cellosolve acetate, cyclohexanone, butyrocellosolve, methyl carbitol, carbitol, butyl carbitol, diethyl carbitol, cyclohexanol, diglyme, and triglyme; and fluorine-based solvents, and of these, methanol and isobutyl alcohol are preferred. These organic solvent may be used either alone, or in combinations of two or more different solvents, but a combination of two or more solvents is preferred.

In those cases where an aforementioned organic solvent is added, there are no particular restrictions on the blend quantity of the organic solvent, although a quantity that results in a concentration of the organopolysiloxane of the component (A) within the composition of at least 30% by mass, and even more preferably 40% by mass or higher, is desirable, as such a quantity facilitates the processing required to produce a thickness for the cured product that is typically within a range from 10 $\mu$m to 3 mm, and preferably from 100 $\mu$m to 3 mm.

- Inorganic Fillers -

Adding an inorganic filler provides a number of effects, including ensuring that the light scattering properties of the cured product and the flowability of the composition are appropriate, and strengthening materials that use the composition. There are no particular restrictions on the type of inorganic filler used, although very fine particulate fillers that do not impair the optical characteristics are preferred, and specific examples include alumina, aluminum hydroxide, fused silica, crystalline silica, and calcium carbonate. The particle size of the inorganic filler is typically within a range from 0.1 to 30 $\mu$m.

- Inorganic Phosphors -

Examples of suitable inorganic phosphors include the types of materials that are widely used in LEDs, such as yttrium aluminum garnet (YAG) phosphors, ZnS phosphors, $Y_2O_2S$ phosphors, red light emitting phosphors, blue light emitting phosphors, and green light emitting phosphors. The particle size of the inorganic phosphor is typically within a range approximately from 0.01 to 10 $\mu$m.

[Method of Preparation]

A composition for use according to present invention may be prepared by any arbitrary method, and can be prepared, for example, by firstly synthesizing a low molecular weight compound (an oligosiloxane) by subjecting the raw material for the component (A), namely, the silane compound or the mixture of the silane compound and the alkyl (poly) silicate, to partial hydrolysis and condensation, and subsequently mixing this low molecular weight compound with the component (B), the component (C), and preferably an organic solvent and/or water, thereby subjecting the low molecular weight compound to further hydrolysis and condensation. As described above, the silane compound, or the mixture of the silane compound and the alkyl (poly)silicate, may be either dissolved or dispersed within an organic solvent. Suitable organic solvents include the organic solvents listed above as suitable optional components.

Furthermore, when curing a composition of the present invention, curing is preferably conducted in a stepwise manner within a range from 80 to 180°C. For example, the composition is preferably first subjected to low temperature curing at 80 to 110°C (for example, 80°C) for 1 hour, subsequently heat cured at a temperature of 120 to 150°C (for example, 120°C) for a further 1 hour (step curing), and then heat cured at a temperature of at least 160°C (for example, 170°C) for 4 hours (post curing). By using this type of stepwise curing, the composition can be satisfactorily cured, and the occurrence of foaming can be suppressed to a suitable level.

The glass transition temperature (Tg) of the transparent cured product obtained by curing a composition of the present invention is usually too high to enable measurement using a commercially available measuring device (such as the thermomechanical tester (product name: TM-7000, measurement range: 25 to 200°C) manufactured by Shinku Riko Co., Ltd.), indicating that the cured product exhibits an extremely high level of heat resistance.

[Applications]

A composition of the present invention is useful for sealing LED elements, and especially for sealing blue LED and ultraviolet LED elements, because the composition exhibits excellent levels of heat resistance, ultraviolet light resistance and transparency.

EXAMPLES

As follows is a more detailed description of the present invention using a series of examples, although the present invention is in no way limited by these examples.

The methyltrimethoxysilane used in the examples is KBM13 (a product name) manufactured by Shin-Etsu Chemical Co., Ltd., the dimethyldimethoxysilane is KBM22 (a product name), also manufactured by Shin-Etsu Chemical Co., Ltd., and the phenyltrimethoxysilane is KBM103 (a product name), also manufactured by Shin-Etsu Chemical Co., Ltd.

<Example 1>

A 1 L three-neck flask fitted with a stirrer and a condenser tube was charged with 109 g (0.8 mol) of methyltrimethoxysilane, 24 g (0.2 mol) of dimethyldimethoxysilane, and 106 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the organic solvent was also removed, yielding a solution of a low molecular weight polymer (A) in which the volatile fraction had been adjusted to 50%.

Subsequently, a 1 L three-neck flask fitted with a stirrer and a condenser tube was charged with 100 g of the solution of the polymer (A), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 36 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 120 g of a cloudy white composition 1 (including organic solvents and with a non-volatile fraction of 60% by mass), comprising titania sol and an organopolysiloxane with a weight average molecular weight of 25,000, represented by an average composition formula (4) shown below:

$$(CH_3)_{1.2}(OX)_{0.28}SiO_{1.26} \qquad (4)$$

(wherein, X represents a combination of hydrogen atoms, methyl groups, and isobutyl groups).

The above composition was cured in accordance with the evaluation methods described below, and the properties of the resulting cured films were tested and evaluated. The results are shown in Table 1.

- Evaluation Methods -

1. External Appearance, Crack Resistance

The prepared composition was placed in a Teflon (registered trademark) coated mold of dimensions 50 mm $\times$ 50 mm $\times$ 2 mm, subsequently subjected to step curing at 80°C for 1 hour and then at 150°C for 1 hour, and was then post-cured for 4 hours at 170°C, thus yielding a cured film of thickness 1 mm. The cured film was inspected visually for external appearance (transparency) and the presence of cracks. If no cracks were visible in the cured film, the crack resistance was evaluated as good, and was recorded as "A", whereas if cracks were detected, the resistance was evaluated as poor, and was recorded as "B".

2. Adhesion

The prepared composition was applied to a glass substrate using an immersion method, subsequently subjected to step curing at 80°C for 1 hour and then at 150°C for 1 hour, and was then post-cured for 4 hours at 170°C, thus forming a cured film of thickness 2 to 3 $\mu$m on the glass substrate. Using a cross-cut adhesion test, the adhesion of the cured film to the glass substrate was investigated. In the cross-cut adhesion test, the cured film formed on the glass substrate was cut with a sharp blade right through to the substrate so as to form sections of a fixed size (1 mm $\times$ 1 mm), an adhesive tape was affixed to the surface of the cut sections and pressed down firmly, and a corner of the adhesive tape was then grasped and pulled rapidly away from the substrate in a vertical direction. The number of individual sections amongst the total number of sections (100) that were not peeled off the substrate is shown in the table. Furthermore, in those cases where cracks had developed in the cured film, making adhesion measurement impossible, the result was recorded in the table as "$\times$".

3. Refractive Index

The prepared composition was applied to a silicon wafer by spin coating, subsequently subjected to step curing at 80°C for 1 hour and then at 150°C for 1 hour, and was then post-cured for 4 hours at 170°C, thus forming a cured film of thickness 2 to 3 $\mu$m on the silicon wafer. The refractive index (d-line: 589 nm) of the cured film was then measured.

4. Ultraviolet Light Resistance

The prepared composition was applied to the surface of a $SiO_2$ substrate of dimensions 30 mm $\times$ 30 mm $\times$ 2.0 mm. Subsequently, the composition was subjected to step curing at 80°C for 1 hour and then at 150°C for 1 hour, and was then post-cured for 4 hours at 170°C, thus yielding a cured film with a thickness of 0.2 mm. This cured film was then irradiated with ultraviolet light (30 mW) for 24 hours using a UV irradiation device (product name: Eye Ultraviolet Curing Apparatus, manufactured by Eyegraphics Co., Ltd.). The surface of the cured film following ultraviolet light irradiation was then inspected visually. If absolutely no deterioration of the cured film surface was noticeable, the ultraviolet light resistance was evaluated as good, and was recorded as "A", if slight deterioration was somewhat noticeable, the ultraviolet light resistance was evaluated as somewhat poor, and was recorded as "B", and if significant deterioration was noticeable, the ultraviolet light resistance was evaluated as poor, and was recorded as "C". Furthermore, if a cured film was not able to be prepared, the result was recorded in the table as "×".

5. Heat resistance

The prepared composition was placed in a Teflon (registered trademark) coated mold of dimensions 50 mm × 50 mm × 2 mm, subsequently subjected to step curing at 80°C for 1 hour and then at 150°C for 1 hour, and was then post-cured for 4 hours at 170°C, thus yielding a cured film of thickness 1 mm. This cured film was then placed in an oven at 250°C, and the remaining mass was measured after 500 hours in the oven. Using this measured value, the residual mass ratio (%) was determined using the following formula, and this ratio was used as an indicator of the heat resistance.

$$\text{Residual mass ratio (\%)} = [(\text{mass (g) of cured film following 500 hours in oven}) / (\text{mass (g) of cured film immediately following preparation})] \times 100$$

Furthermore, if a cured film was not able to be prepared, a "measurement impossible" evaluation was recorded as "×". In the tables, the heat resistance is shown as a percentage (%).

<Example 2>

A 1 L three-neck flask fitted with a stirrer and a condenser tube was charged with 68.1 g (0.5 mol) of methyltrimethoxysilane, 60.1 g (0.5 mol) of dimethyldimethoxysilane, and 118 g of isobutyl alcohol, and the mixture was cooled in ice with constant stirring. With the temperature inside the flask maintained at 0 to 20°C, 54 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 μS/cm. The water was then removed from the washed reaction solution by azeotropic dehydration, and some of the organic solvent was also removed, yielding a solution of a low molecular weight polymer (B) in which the volatile fraction had been adjusted to 50%.
Subsequently, a 1 L three-neck flask fitted with a stirrer and a condenser tube was charged with 100 g of the solution of the polymer (B), 88 g of methanol, and 44 g of isobutyl alcohol, and the mixture was cooled in ice with constant stirring. With the temperature inside the flask maintained at 0 to 20°C, 42 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 36 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 104 g of a cloudy white composition 2 (including organic solvents and with a non-volatile fraction of 60% by mass), comprising titania sol and an organopolysiloxane with a weight average molecular weight of 15,000, represented by an average composition formula (5) shown below:

$$(CH_3)_{1.5}(OX)_{0.22}SiO_{1.14} \qquad (5)$$

(wherein, X is as defined above for the average composition formula (4)).
The composition was cured in accordance with the above evaluation methods, and the properties of the resulting cured films were tested and evaluated. The results are shown in Table 1.

<Example 3>

A 1L three-neck flask fitted with a stirrer and a condenser tube was charged with 115.8 g (0.85 mol) of methyltrimethoxysilane, 18.0 g (0.15 mol) of dimethyldimethoxysilane, and 102 g of isobutyl alcohol, and the mixture was cooled in ice with constant stirring. With the temperature inside the flask maintained at 0 to 20°C, 78.3 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 μS/cm. The water was then removed from the washed reaction solution by azeotropic dehydration, and some of the organic solvent was also removed, yielding a solution of a low molecular weight polymer (C) in which the volatile fraction had been adjusted to 50%. Subsequently, a 1 L three-neck flask fitted with a stirrer and a condenser tube was charged with 100 g of the solution of the polymer (C), 88 g of methanol, and 44 g of isobutyl alcohol, and the mixture was cooled in ice with constant stirring. With the temperature inside the flask maintained at 0 to 20°C, 111 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 24 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 139 g of a cloudy white composition 3 (including organic solvents and with a non-volatile fraction of 60% by mass), comprising titania sol and an organopolysiloxane with a weight average molecular weight of 96,000, represented by an average composition formula (6) shown below:

$$(CH_3)_{1.15}(OX)_{0.23}SiO_{1.31} \qquad (6)$$

(wherein, X is as defined above for the average composition formula (4)).

The composition was cured in accordance with the above evaluation methods, and the properties of the resulting cured films were tested and evaluated. The results are shown in Table 1.

<Example 4>

A1L three-neck flask fitted with a stirrer and a condenser tube was charged with 109 g (0.8 mol) of methyltrimethoxysilane, 24 g (0.2 mol) of dimethyldimethoxysilane, and 128 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 μS/cm. The water was then removed from the washed reaction solution by azeotropic dehydration, and some of the solvent was also removed, yielding a solution of a low molecular weight polymer (D) in which the volatile fraction had been adjusted to 50%.

Subsequently, a 1 L three-neck flask fitted with a stirrer and a condenser tube was charged with 100 g of the solution of the polymer (D), 88 g of methanol, and 44 g of isobutyl alcohol, and the mixture was cooled in ice with constant stirring. With the temperature inside the flask maintained at 0 to 20°C, 167 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 36 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 166 g of a cloudy white composition 4 (including organic solvents and with a non-volatile fraction of 60% by mass), comprising titania sol and an organopolysiloxane with a weight average molecular weight of 21,500, represented by an average composition formula (7) shown below:

$$(CH_3)_{1.2}(OX)_{0.34}SiO_{1.22} \qquad (7)$$

(wherein, X is as defined above for the average composition formula (4)).

The composition was cured in accordance with the above evaluation methods, and the properties of the resulting cured films were tested and evaluated. The results are shown in Table 1.

<Comparative Example 1>

A1L three-neck flask fitted with a stirrer and a condenser tube was charged with 27.2 g (0.2 mol) of methyltrimethoxysilane, 96.2 g (0.8 mol) of dimethyldimethoxysilane, and 106 g of isobutyl alcohol, and the mixture was cooled in ice with constant stirring. With the temperature inside the flask maintained at 0 to 20°C, 57.1 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 μS/cm. The water was then removed from the washed reaction solution by azeotropic dehydration, and some of the solvent was also removed, yielding a solution of a low molecular weight polymer (E) in which the volatile fraction had been adjusted to 50%.

Subsequently, a 1 L three-neck flask fitted with a stirrer and a condenser tube was charged with 100 g of the solution of the polymer (E), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 24 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 118 g of a cloudy white comparative composition 1 (including organic solvents and with a non-volatile fraction of 60% by mass), comprising titania sol and an organopolysiloxane with a weight average molecular weight of 18,000, represented by an average composition formula (8) shown below:

$$(CH_3)_{1.8}(OX)_{0.22}SiO_{0.99} \qquad (8)$$

(wherein, X is as defined above for the average composition formula (4)).

The composition was cured in accordance with the above evaluation methods, and the properties of the resulting cured films were tested and evaluated. The results are shown in Table 1.

<Comparative Example 2>

First, a solution of a low molecular weight polymer (A) was prepared in the same manner as the Example 1.

Subsequently, a 1 L three-neck flask fitted with a stirrer and a condenser tube was charged with 100 g of the solution of the polymer (A), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 8 hours at room temperature. After this 8 hour period, the mixture was stripped and filtered, yielding 119 g of a cloudy white comparative composition 2 (including organic solvents and with a non-volatile fraction of 60% by mass), comprising titania sol and an organopolysiloxane with a weight average molecular weight of 2,100, represented by an average composition formula (9) shown below:

$$(CH_3)_{1.2}(OX)_{1.21}SiO_{0.79} \qquad (9)$$

(wherein, X is as defined above for the average composition formula (4)).

The composition was cured in accordance with the above evaluation methods, and the properties of the resulting cured films were tested and evaluated. The results are shown in Table 1.

<Comparative Example 3>

A1L three-neck flask fitted with a stirrer and a condenser tube was charged with 41 g (0.3 mol) of methyltrimethoxysilane, 170.8 g (0.7 mol) of diphenyldimethoxysilane, and 128 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 μS/cm. The water was then removed from the washed reaction solution by azeotropic dehydration, and some of the solvent was also removed, yielding a solution of a low molecular weight polymer (F) in which the volatile fraction had been adjusted to 50%.

Subsequently, a 1 L three-neck flask fitted with a stirrer and a condenser tube was charged with 100 g of the solution of the polymer (F), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 36 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 115 g of a cloudy white comparative composition 3 (including organic solvents and with a non-volatile fraction of 60% by mass), comprising titania sol and an organopolysiloxane with a weight average molecular weight of 19,700, represented by an average composition formula (10) shown below:

$$(CH3)_{0.3}(C_6H5)_{1.4}(OX)_{0.12}SiO_{1.09} \qquad (10)$$

(wherein, X is as defined above for the average composition formula (4)).

The composition was cured in accordance with the above evaluation methods, and the properties of the resulting cured films were tested and evaluated. The results are shown in Table 1.

<Comparative Example 4>

A 1L three-neck flask fitted with a stirrer and a condenser tube was charged with 109 g (0.8 mol) of methyltrimethoxysilane, 24 g (0.2 mol) of dimethyldimethoxysilane, and 106 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred at a reflux temperature for 6 hours. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm.
The water was then removed from the washed reaction solution by azeotropic dehydration, 0.32 g of aluminum monoacetylacetonate bis(ethylacetoacetate) was added, and then some of the solvent was removed, yielding 108 g of a transparent comparative composition 4 (including organic solvents and with a non-volatile fraction of 60% by mass) that contained no titania sol and comprised an organopolysiloxane with a weight average molecular weight of 18,500, represented by an average composition formula (11) shown below:

$$(CH_3)_{1.2}(OX)_{0.22}SiO_{1.29} \qquad (11)$$

(wherein, X is as defined above for the average composition formula (4)).

The composition was cured in accordance with the above evaluation methods, and the properties of the resulting cured films were tested and evaluated. The results are shown in Table 1.

[Table 1]

| | Example | | | | Comparative example | | | |
|---|---|---|---|---|---|---|---|---|
| | 1 | 2 | 3 | 4 | 1 | 2 | 3 | 4 |
| Methyl group content (% by mass) [*1] | 18.0 | 25.1 | 15.1 | 13.0 | 25.6 | 18.0 | 4.6 | 26.0 |
| Phenyl group content (% by mass) [*2] | 0 | 0 | 0 | 0 | 0 | 0 | 37.7 | 0 |
| Metal oxide sol fine particles content (% by mass) [*3] | 30.7 | 20.1 | 40.0 | 50.0 | 30.7 | 30.7 | 30.7 | 0 |
| T units / D units in component (A) | 8/2 | 5/5 | 8.5/1.5 | 8/2 | 2/8 | 8/2 | 3/7 | 8/2 |
| Weight average molecular weight of component (A) | 25,000 | 15,000 | 96,000 | 21,500 | 18,000 | 2,100 | 19,700 | 18,500 |
| Refractive index | 1.55 | 1.48 | 1.59 | 1.65 | 1.54 | 1.55 | 1.65 | 1.39 |
| External appearance | transparent | transparent | transparent | transparent | transparent | transparent | transparent | transparent |
| Crack resistance | A | A | A | A | B | B | B | B |
| Adhesion (cross-cut test) | 100/100 | 100/100 | 100/100 | 100/100 | 0/100 | × | 20/100 | 80/100 |
| Ultraviolet light resistance | A | A | A | A | B | × | C | A |
| Heat resistance (%) | 99 | 96 | 99 | 98 | 86 | × | 92 | 98 |

[*1] Methyl group content: the theoretical quantity of methyl groups within the cured product.
[*2] Phenyl group content: the theoretical quantity of phenyl groups within the cured product.
[*3] Metal oxide sol fine particles content: the theoretical quantity of fine particles of metal oxide sol (the non-volatile fraction) within the cured product.

13

<Example 5>

A1L three-neck flask fitted with a stirrer and a condenser tube was charged with 41 g (0.3 mol) of methyltrimethoxysilane, 24 g (0.2 mol) of dimethyldimethoxysilane, 99 g (0.5 mol) of phenyltrimethoxysilane, and 128 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the solvent was also removed, yielding a solution of a low molecular weight polymer (G) in which the volatile fraction had been adjusted to 50%.

Subsequently, a 1 L three-neck flask fitted with a stirrer and a condenser tube was charged with 100 g of the solution of the polymer (G), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 36 hours at room temperature. Subsequently, the reaction mixture was heated, 25 g of water was added dropwise at reflux temperature, and the mixture was then stirred for 6 hours at the reflux temperature. After this 6 hour period, the mixture was stripped and filtered, yielding 118 g of a cloudy white composition 5 (including organic solvents and with a non-volatile fraction of 60% by mass), comprising titania sol and an organopolysiloxane with a weight average molecular weight of 18,500, represented by an average composition formula (12) shown below:

$$(CH_3)_{0.7}(C_6H_5)_{0.5}(OX)_{0.28}SiO_{1.26} \qquad (12)$$

(wherein, X is as defined above for the average composition formula (4)).

The composition was cured in accordance with the above evaluation methods, and the properties of the resulting cured films were tested and evaluated. The results are shown in Table 2.

<Example 6>

A 1 L three-neck flask fitted with a stirrer and a condenser tube was charged with 27.2 g (0.2 mol) of methyltrimethoxysilane, 59.5 g (0.3 mol) of phenyltrimethoxysilane, 60.1 g (0.5 mol) of dimethyldimethoxysilane, and 118 g of isobutyl alcohol, and the mixture was cooled in ice with constant stirring. With the temperature inside the flask maintained at 0 to 20°C, 54 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the solvent was also removed, yielding a solution of a low molecular weight polymer (H) in which the volatile fraction had been adjusted to 50%.

Subsequently, a 1 L three-neck flask fitted with a stirrer and a condenser tube was charged with 100 g of the solution of the polymer (H), 88 g of methanol, and 44 g of isobutyl alcohol, and the mixture was cooled in ice with constant stirring. With the temperature inside the flask maintained at 0 to 20°C, 42 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum tris(ethylacetoacetate) was added, and the mixture was stirred for 3 hours at 0 to 20°C, and then for a further 36 hours at room temperature. Subsequently, the reaction mixture was heated, 25 g of water was added dropwise at a reflux temperature, and the mixture was then stirred for 6 hours at the reflux temperature. After this 6 hour period, the mixture was stripped and filtered, yielding 103 g of a cloudy white composition 6 (including organic solvents and with a non-volatile fraction of 60% by mass), comprising titania sol and an organopolysiloxane with a weight average molecular weight of 12,500, represented by an average composition formula (13) shown below:

$$(CH_3)_{1.2}(C_6H_5)_{0.3}(OX)_{0.22}SiO_{1.14} \qquad (13)$$

(wherein, X is as defined above for the average composition formula (4)).

The composition was cured in accordance with the above evaluation methods, and the properties of the resulting cured films were tested and evaluated. The results are shown in Table 2.

<Example 7>

A 1 L three-neck flask fitted with a stirrer and a condenser tube was charged with 48.9 g (0.2 mol) of diphenyldimethoxysilane, 158.6 g (0.8 mol) of phenyltrimethoxysilane, and 128 g of isobutyl alcohol, and the mixture was cooled in ice with constant stirring. With the temperature inside the flask maintained at 0 to 20°C, 78.3 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the solvent was also removed, yielding a solution of a low molecular weight polymer (I) in which the volatile fraction had been adjusted to 50%.

Subsequently, a 1 L three-neck flask fitted with a stirrer and a condenser tube was charged with 100 g of the solution of the polymer (I), 88 g of methanol, and 44 g of isobutyl alcohol, and the mixture was cooled in ice with constant stirring. With the temperature inside the flask maintained at 0 to 20°C, 111 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 24 hours at room temperature. Subsequently, the reaction mixture was heated, 25 g of water was added dropwise at a reflux temperature, and the mixture was then stirred for 6 hours at the reflux temperature. After this 6 hour period, the mixture was stripped and filtered, yielding 136 g of a cloudy white composition 7 (including organic solvents and with a non-volatile fraction of 60% by mass), comprising titania sol and an organopolysiloxane with a weight average molecular weight of 96,000, represented by an average composition formula (14) shown below:

$$(C6H_5)_{1.2}(OX)_{0.15}SiO_{1.33} \qquad (14)$$

(wherein, X is as defined above for the average composition formula (4)).

The composition was cured in accordance with the above evaluation methods, and the properties of the resulting cured films were tested and evaluated. The results are shown in Table 2.

<Example 8>

A 1 L three-neck flask fitted with a stirrer and a condenser tube was charged with 100 g of a solution of the low molecular weight polymer (I) obtained in the same manner as the example 7, 88 g of methanol, and 44 g of isobutyl alcohol, and the mixture was cooled in ice with constant stirring. With the temperature inside the flask maintained at 0 to 20°C, 167 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum acetylacetonate was added, and the mixture was stirred for 3 hours at 0 to 20°C, and then for a further 36 hours at room temperature. Subsequently, the reaction mixture was heated, 25 g of water was added dropwise at a reflux temperature, and the mixture was then stirred for 6 hours at the reflux temperature. After this 6 hour period, the mixture was stripped and filtered, yielding 120 g of a cloudy white composition 8 (including organic solvents and with a non-volatile fraction of 60% by mass), comprising titania sol and an organopolysiloxane with a weight average molecular weight of 21,700, represented by an average composition formula (15) shown below:

$$(C_6H_5)_{1.2}(OX)_{0.25}SiO_{1.28} \qquad (15)$$

(wherein, X is as defined above for the average composition formula (4)).
The composition was cured in accordance with the above evaluation methods, and the properties of the resulting cured films were tested and evaluated. The results are shown in Table 2.

<Comparative Example 5>

A1L three-neck flask fitted with a stirrer and a condenser tube was charged with 13.6 g (0.1 mol) of methyltrimethoxysilane, 96.2 g (0.8 mol) of dimethyldimethoxysilane, 19.8 g (0.1 mol) of phenyltrimethoxysilane, and 106 g of isobutyl alcohol, and the mixture was cooled in ice with constant stirring. With the temperature inside the flask maintained at 0 to 20°C, 57.1 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the solvent was also removed, yielding a solution of a low molecular weight polymer (J) in which the volatile fraction had been adjusted to 50%.

Subsequently, a 1 L three-neck flask fitted with a stirrer and a condenser tube was charged with 100 g of the solution of the polymer (J), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 24 hours at room temperature. Subsequently, the reaction mixture was heated, 25 g of water was added dropwise at a reflux temperature, and the mixture was stirred for 6 hours at the reflux temperature. After this 6 hour period, the mixture was stripped and filtered, yielding 112 g of a cloudy white comparative composition 5 (including organic solvents and with a non-volatile fraction of 60% by mass), comprising titania sol and an organopolysiloxane with a weight average molecular weight of 19,600, represented by an average composition formula (16) shown below:

$$(CH_3)_{1.7}(C_6H_5)_{0.1}(OX)_{0.22}SiO_{0.99} \qquad (16)$$

(wherein, X is as defined above for the average composition formula (4)).

The composition was cured in accordance with the above evaluation methods, and the properties of the resulting cured films were tested and evaluated. The results are shown in Table 2.

<Comparative Example 6>

A1L three-neck flask fitted with a stirrer and a condenser tube was charged with 41 g (0.3 mol) of methyltrimethoxysilane, 24 g (0.2 mol) of dimethyldimethoxysilane, 99 g (0.5 mol) of phenyltrimethoxysilane, and 106 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred for 3 hours at a temperature of 0 to 20°C. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, and some of the solvent was also removed, yielding a solution of a low molecular weight polymer (K) in which the volatile fraction had been adjusted to 50%.

Subsequently, a 1 L three-neck flask fitted with a stirrer and a condenser tube was charged with 100 g of the solution of the polymer (K), 88 g of methanol, and 44 g of isobutyl alcohol, and the mixture was cooled in ice with constant stirring. With the temperature inside the flask maintained at 0 to 20°C, 74 g of Optolake 1130Z [product name, a titania sol with a non-volatile fraction (composition: $TiO_2$ 78.6% + $SiO_2$ 20% + $ZrO_2$ 1.4%) of 30% by mass, manufactured by Catalysts & Chemicals Ind. Co., Ltd.] was added dropwise. Following completion of the dropwise addition, 0.25 g of aluminum monoacetylacetonate bis(ethylacetoacetate) was added, and the mixture was stirred for 3 hours at 0 to 20°C, and then for a further 8 hours at room temperature. After this 8 hour period, the mixture was stripped and filtered, yielding 117 g of a cloudy white comparative composition 6 (including organic solvents and with a non-volatile fraction of 60% by mass), comprising titania sol and an organopolysiloxane with a weight average molecular weight of 2,200, represented by an average composition formula (17) shown below:

$$(CH_3)_{0.7}(C_6H_5)_{0.5}(OX)_{1.21}SiO_{0.79} \qquad (17)$$

(wherein, X is as defined above for the average composition formula (4)).

The composition was cured in accordance with the above evaluation methods, and the properties of the resulting cured films were tested and evaluated. The results are shown in Table 2.

<Comparative Example 7>

A 1 L three-neck flask fitted with a stirrer and a condenser tube was charged with 68.1 g (0.5 mol) of methyltrimethoxysilane, 24 g (0.2 mol) of dimethyldimethoxysilane, 59.5 g (0.3 mol) of phenyltrimethoxysilane, and 106 g of isobutyl alcohol, and the mixture was cooled in ice with constant stirring. With the temperature inside the flask maintained at 0 to 20°C, 60.5 g of 0.05 N hydrochloric acid solution was added dropwise. Following completion of the dropwise addition, the reaction mixture was stirred at a reflux temperature for 7 hours. Subsequently, 150 g of xylene was added to dilute the reaction solution in the flask. This diluted reaction solution was then poured into a separating funnel, and washed repeatedly with 300 g samples of water until the electrical conductivity of the separated wash water fell to not more than 10.0 $\mu$S/cm. The water was then removed from the washed reaction solution by azeotropic dehydration, 0.32 g of aluminum monoacetylacetonate bis(ethylacetoacetate) was added, and then some of the solvent was removed, yielding 113 g of a transparent comparative composition 7 (including organic solvents and with a non-volatile fraction of 60% by mass) that contained no titania sol and comprised an organopolysiloxane with a weight average molecular weight of 18,800, represented by an average composition formula (18) shown below:

$$(CH_3)_{0.9}(C_6H_5)_{0.3}(OX)_{0.22}SiO_{1.28} \qquad (18)$$

(wherein, X is as defined above for the average composition formula (4)).

The composition was cured in accordance with the above evaluation methods, and the properties of the resulting cured films were tested and evaluated. The results are shown in Table 2.

[Table 2]

| | Example | | | | Comparative example | | |
|---|---|---|---|---|---|---|---|
| | 5 | 6 | 7 | 8 | 5 | 6 | 7 |
| Methyl group content (% by mass) [*1] | 7.3 | 16.1 | 0 | 0 | 22.6 | 7.3 | 15.5 |
| Phenyl group content (% by mass) [*2] | 26.8 | 20.7 | 38.8 | 32.3 | 6.8 | 26.8 | 26.6 |
| Metal oxide sol fine particles content (% by mass) [*3] | 30.7 | 20.1 | 40.0 | 50.0 | 30.7 | 30.7 | 0 |
| T units/D units in component (A) | 8/2 | 5/5 | 8/2 | 8/2 | 2/8 | 8/2 | 8/2 |
| Weight average molecular weight of component (A) | 18,500 | 12,500 | 96,000 | 21,700 | 19,600 | 2,200 | 18,800 |
| Refractive index | 1.60 | 1.51 | 1.70 | 1.75 | 1.56 | 1.60 | 1.43 |
| External appearance | transparent | transparent | transparent | transparent | transparent | transparent | transparent |
| Crack resistance | A | A | A | A | B | B | B |
| Adhesion | 100/100 | 100/100 | 100/100 | 100/100 | 0/100 | × | 90/100 |
| Heat resistance (%) | 99 | 97 | 99 | 99 | 87 | × | 92 |

[*1] Methyl group content: the theoretical quantity of methyl groups within the cured product.
[*2] Phenyl group content: the theoretical quantity of phenyl groups within the cured product.
[*3] Metal oxide sol fine particles content: the theoretical quantity of fine particles of metal oxide sol (the non-volatile fraction) within the cured product.

**Claims**

1.  Use of a resin composition comprising:

    (A) an organopolysiloxane with a polystyrene equivalent weight average molecular weight of at least $3 \times 10^3$, represented by an average composition formula (1) shown below:

    $$R^1{}_a(OX)_b SiO_{(4-a-b)/2} \qquad (1)$$

    wherein, each $R^1$ represents, independently, an alkyl group of 1 to 6 carbon atoms, an alkenyl group of 2 to 6 carbon atoms, or an aryl group of 6 to 10 carbon atoms, each X represents, independently, a hydrogen atom, or an alkyl groups, alkenyl group, alkoxyalkyl group or acyl group of 1 to 6 carbon atoms, a represents a number within a range from 1.00 to 1.5, and b represents a number that satisfies $0 < b < 2$, provided that $1.00 < a+b < 2$,
    (B) a condensation catalyst comprising an aluminum chelate compound, and
    (C) a metal oxide sol,

    for scaling a light emitting diode (LED) element.

2.  The use according to claim 1, wherein said aluminum chelate compound of component (H) is selected from the group consisting of reaction products of an aluminum trialkoxide and an alkyl acetoacetate.

3.  The use according to claim 2, wherein said aluminum chelate compound of component (B) is aluminun monoacetylacetonale bis (ethylacetoacetate).

4.  The use according to any one of the preceding claims, wherein said composition further comprises at least one component selected from the groups consisting of morganic fillers, inorganic phosphors, age resistors, radical inhibitors, ultraviolet absorbers, adhesion improves, flame retardants, surfactants, storage stability improvers, antiozonants, photostabilizers, thickeners, plasticizers, coupling agents, antioxidants, thermal stabilizer, conductivity imparting agents, antistatic agents, radiation blockers, nucleating agents, phosphorus-based peroxide decomposition agents, lubricants, pigments, metal deactivators, physical property modifier, and organic solvents.

5.  The use of any of the preceding claims, wherein said metal oxide sol (C) is selected from the group consisting of titania sols, silica sols, alumina sols, antimony oxide sols, and zirconium oxide sols.

6.  The use of any one of the preceding claims, wherein in said average composition formula (1) that represents said component (A), said $R^1$ groups comprise only alkyl groups of 1 to 6 carbon atoms.

7.  The use of any one of the preceding claims, wherein in said average composition formula (1) that represents said component (A), said $R^1$ groups either consists of alkyl groups of 1 to 6 carbon atoms and aryl groups of 6 to 10 carbon atoms, or consists only of said aryl group, and a molar ratio of said alkyl groups / said aryl groups is within a range from 0/10 to 9/1.

8.  The use of any one of the preceding claims, wherein said composition further comprises an organic solvent with a boiling point of at least 64°C, and a concentration of said organopolysiloxane (A) within said composition is at least 30% hy mass.

9.  The use of claim 8 wherein the resin composition is formed into a transparent cured product having a thickness in the range of from 100 $\mu$m to 3 mm.

**Patentansprüche**

1.  Verwendung einer Harzzusammensetzung, umfassend:

    (A) ein Organopolysiloxan mit einem Polystyrol-äquivalenten gewichtsgemittelten Molekulargewicht von mindestens $3 \times 10^3$, dargestellt durch eine nachstehend gezeigte Formel (1) mittlerer Zusammensetzung:

    $$R^1{}_a(OX)_b SiO_{(4-a-b)/2} \qquad (1)$$

wobei jedes R$^1$ unabhängig eine Alkylgruppe mit 1 bis 6 Kohlenstoffatomen, eine Alkenylgruppe mit 2 bis 6 Kohlenstoffatomen oder eine Arylgruppe mit 6 bis 10 Kohlenstoffatomen darstellt, jedes X unabhängig ein Wasserstoffatom oder eine Alkylgruppe, Alkenylgruppe, Alkoxyalkylgruppe oder Acylgruppe mit 1 bis 6 Kohlenstoffatomen darstellt, a eine Zahl innerhalb eines Bereichs von 1,00 bis 1,5 darstellt und b eine Zahl darstellt, welche 0 < b < 2 genügt, mit der Maßgabe, daß 1,00 < a + b < 2,

(B) einen Kondensationskatalysator, umfassend eine Aluminium-Chelat-Verbindung, und

(C) ein Metalloxidsol,

zum Versiegeln eines Licht-emittierenden Dioden (LED) Elements.

2. Verwendung nach Anspruch 1, wobei die Aluminium-Chelat-Verbindung von Komponente (B) aus der Gruppe, bestehend aus Reaktionsprodukten eines Aluminiumtrialkoxids und eines Alkylacetoacetats, ausgewählt ist.

3. Verwendung nach Anspruch 2, wobei die Aluminium-Chelat-Verbindung von Komponente (B) Aluminiummonoacetylacetonat-bis-(ethylacetoacetat) ist.

4. Verwendung nach einem der vorhergehenden Ansprüche, wobei die Zusammensetzung weiter mindestens eine Komponente, ausgewählt aus der Gruppe, bestehend aus anorganischen Fülistoffen, anorganischen Phosphoren, Alterungshemmstoffen, Radikalhemmstoffen, Ultraviolett-Absorbern, Haftungsverbesserern, Flammhemmstoffen, oberflächenaktiven Mitteln, Lagerungsstabilitäts-Verbesserern, Ozonschutzmitteln, Photostabilisatoren, Verdikkungsmitteln, Weichmachern, Haftmitteln, Antioxidantien, thermischen Stabilisatoren, Leitfähigkeit verleihenden Mitteln, antistatischen Mitteln, Strahlungsblockern, Keimbildungsmitteln, Peroxidzersetzungsmitteln auf Phosphorbasis, Schmiermitteln, Pigmenten, Metall-Desaktivatoren, Modifikatoren physikalischer Eigenschaften und organischen Lösungsmitteln, umfaßt.

5. Verwendung nach einem der vorhergehenden Ansprüche, wobei das Metalloxidsol (C) aus der Gruppe, bestehend aus Titandioxidsolen, Siliziumdioxidsolen, Aluminiumoxidsolen, Antimonoxidsolen und Zirconiumoxidsolen, ausgewählt ist.

6. Verwendung nach einem der vorhergehenden Ansprüche, wobei in der Formel (1) mittlerer Zusammensetzung, welche die Komponente (A) darstellt, die R$^1$-Gruppen nur Alkylgruppen mit 1 bis 6 Kohlenstoffatomen umfassen.

7. Verwendung nach einem der vorhergehenden Ansprüche, wobei in der Formel (1) mittlerer Zusammensetzung, welche die Komponente (A) darstellt, die R$^1$-Gruppen entweder aus Alkylgruppen mit 1 bis 6 Kohlenstoffatomen und Arylgruppen mit 6 bis 10 Kohlenstoffatomen bestehen, oder nur aus den Arylgruppen bestehen, und ein molares Verhältnis von den Alkylgruppen/den Arylgruppen in einem Bereich von 0/10 bis 9/1 liegt.

8. Verwendung nach einem der vorhergehenden Ansprüche, wobei die Zusammensetzung weiter ein organisches Lösungsmittel mit einem Siedepunkt von mindestens 64°C umfaßt, und eine Konzentration des Organopolysiloxans (A) in der Zusammensetzung mindestens 30 Massenprozent beträgt.

9. Verwendung nach Anspruch 8, wobei die Harzzusammensetzung zu einem transparenten gehärteten Produkt mit einer Dicke im Bereich von 100 $\mu$m bis 3 mm geformt wird.

**Revendications**

1. Utilisation d'une composition de résine comprenant:

(A) un organopolysiloxane ayant un poids moléculaire moyen en poids d'équivalent polystyrène d'au moins 3 x 10$^3$, représenté par une formule de composition moyenne (1) présentée ci-dessous:

$$R^1{}_a(OX)_bSiO_{(4-a-b)/2} \qquad (1)$$

dans laquelle, chaque R$^1$ représente indépendamment un groupe alkyle de 1 à 6 atomes de carbone, un groupe alcényle de 2 à 6 atomes de carbone, ou un groupe aryle de 6 à 10 atomes de carbone, chaque X représente indépendamment un atome d'hydrogène, ou un groupe alkyle, un groupe alcényle, un groupe alcoxyalkyle ou une groupe acyle de 1 à 6 atomes de carbone, a représente un nombre compris dans un intervalle allant de 1,00 à 1,5, et b représente un nombre qui satisfait à 0<b<2, pourvu que 1,00<a+b<2,

(B) un catalyseur de condensation comprenant un composé de chélate d'aluminium, et

(C) un sol d'oxyde métallique,

pour le scellement d'un élément de diode électroluminescente (DEL).

2. Utilisation selon la revendication 1, où ledit composé de chélate d'aluminium du composant (B) est choisi dans le groupe constitué par les produits réactionnels d'un trialcoxyde d'aluminium et d'un acétoacétate d'alkyle.

3. Utilisation selon la revendication 2, où ledit composé de chélate d'aluminium du composant (B) est un monoacétylacétonate bis(éthylacétoacétate) d'aluminium.

4. Utilisation selon l'une quelconque des revendications précédentes, où ladite composition comprend en outre au moins un composant choisi dans le groupe constitué par les charges inorganiques, les phosphores inorganiques, les anti-oxygènes, les inhibiteurs de radicaux, les absorbants d'ultraviolet, les améliorants d'adhérence, les ignifuges, les agents tensioactifs, les améliorants de stabilité au stockage, les antiozones, les photostabilisants, les épaississants, les plastifiants, les agents de couplage, les antioxydants, les stabilisants thermiques, les agents conférant une conductivité, les agents antistatiques, les agents bloquants de radiations, les agents nucléants, les agents de décomposition de peroxyde à base de phosphore, les lubrifiants, les pigments, les désactivateurs de métaux, les modificateurs de propriétés physiques, et les solvants organiques.

5. Utilisation selon l'une quelconque des revendications précédentes, où ledit sol d'oxyde métallique (C) est choisi dans le groupe constitué par les sols de dioxyde de titane, les sols de silice, les sols d'oxyde d'aluminium, les sols d'oxyde d'antimoine et les sols d'oxyde de zirconium.

6. Utilisation selon l'une quelconque des revendications précédentes, où dans ladite formule de composition moyenne (1) qui représente ledit composant (A), lesdits groupes $R^1$ ne comprennent que des groupes alkyle de 1 à 6 atomes de carbone.

7. Utilisation selon l'une quelconque des revendications précédentes, où dans ladite formule de composition moyenne (1) qui représente ledit composant (A), lesdits groupes $R^1$ sont constitués soit de groupes alkyle de 1 à 6 atomes de carbone et de groupes aryle de 1 à 6 atomes de carbone, soit uniquement desdits groupes aryle, et un rapport molaire desdits groupes alkyle/lesdits groupes aryle est compris dans un intervalle de 0/10 à 9/1.

8. Utilisation selon l'une quelconque des revendications précédentes, où ladite composition comprend en outre un solvant organique ayant un point d'ébullition d'au moins 64°C, et une concentration dudit organopolysiloxane (A) dans ladite composition est d'au moins 30% en masse.

9. Utilisation selon la revendication 8, où la composition de résine est transformée en un produit durci transparent ayant une épaisseur comprise dans l'intervalle allant de 100 $\mu$m à 3 mm.

**EP 1 876 201 B1**

**REFERENCES CITED IN THE DESCRIPTION**

**Patent documents cited in the description**

- EP 1375615 A